# EUROPEAN PATENT SPECIFICATION

(11) **EP 1 505 009 B1**
(45) Date of publication and mention of the grant of the patent: **28.04.2010**
(21) Application number: 04013952.9
(22) Date of filing: 15.06.2004
(51) Int. Cl.: B65G 1/02, B65G 1/04

(54) **Apparatus for storing materials**
Vorrichtung zum Lagern von Materialien
Appareil de stockage de matériels

(30) Priority: 20.06.2003 IT mo20030181
(43) Date of publication of application: 09.02.2005
(73) Proprietor: ASCOM S.P.A., 41043 Formigine (Prov. of Modena) (IT); MASCOLO, Germano, 47837 Montegridolfo (Prov. of Rimini) (IT)
(72) Inventor: Mascolo, Germano, 47837 Montegridolfo(Prov. of Rimini) (IT)
(74) Representative: Modiano, Micaela Nadia

(56) References cited:
- DE-A- 10 125 790
- DE-U- 9 213 478

## Description

The present invention relates to an apparatus for storing materials.

It is known that the need to provide optimum management of stock reserves, so as to reduce times and costs related to storage and handling of materials, has long been felt in all industrial and commercial situations.

In this regard, the research and development of new solutions is increasingly oriented toward the design of automatic or semiautomatic storage systems characterized by a high saturation index.

For example, automatic storage systems are known which are predominantly vertical and are served by stacker cranes, i.e., by platforms that can move both horizontally and vertically along the lanes delimited by the racks and are provided with elements for gripping the load units to be handled.

Compactable storage systems are also known which are constituted by racks that are movable along floor-mounted tracks arranged transversely to the longitudinal extension of said racks and are served for example by a lift truck or automatic shuttle.

These storage systems generally have a single access aisle, which is formed between two adjacent racks, at the position where a load unit is to be picked up or deposited, by means of the sliding of said racks along said tracks.

However, in known types of storage system the racks used are generally constituted by a supporting structure that supports a plurality of shelves fixed to said structure by means of threaded elements.

The uprights of said structure may have, for example, a plurality of holes distributed along their length, with a spacing on the order of a few tens of millimeters, in which the shelf fixing bolts can be inserted.

During design of the storage area, the height of the storage compartments is therefore determined as a function of the maximum dimensions of the load units to be allocated.

During system installation, the shelves of the racks are arranged at distances that approximate as closely as possible the calculated compartment height.

These known storage systems are not free from drawbacks, including the fact that the racks that are used are scarcely flexible, since they cannot be adapted easily to different heights of the load units to be stored and therefore entail a waste of space, an increase in the area required to store given quantities of materials, and an increase in installation and management costs.

In the case of shelves bolted to the supporting structure, sometimes it is in fact possible to perform manual interventions to remove and reposition said shelves.

However, such interventions are rather difficult, require considerable execution times, and slow the handling of materials within the storage systems.

It is therefore evident that the rigidity of conventional systems penalizes their flexibility in use, also in view of the fact that the type of load unit used in companies can change over time, requiring periodic redesigns and restructurings of the storage areas, which necessarily entail considerable investments.

DE 101 25 790 A discloses a storage system according to the preamble of claim 1, the system comprising shelf modules having opposing side walls provided with seatings for shelf bottom elements, and a loading/unloading unit provided with means for handing goods packages and for inserting shelf bottom elements.

The aim of the present invention is to eliminate the drawbacks noted above of known storage systems, by providing an apparatus for storing materials that allows to optimize the volume saturation index of the storage area and to maximize the flexibility of said system.

Within this aim, an object of the present invention is to provide an apparatus for storing materials that is simple, relatively easy to provide in practice, safe in use, effective in operation, and has a relatively low cost.

In accordance with the invention, there is provided an apparatus for storing materials as defined in the appended claims.

Further characteristics and advantages of the present invention will become better apparent from the following detailed description of a preferred but not exclusive embodiment of an apparatus for storing materials, illustrated by way of non-limiting example in the accompanying drawings, wherein:

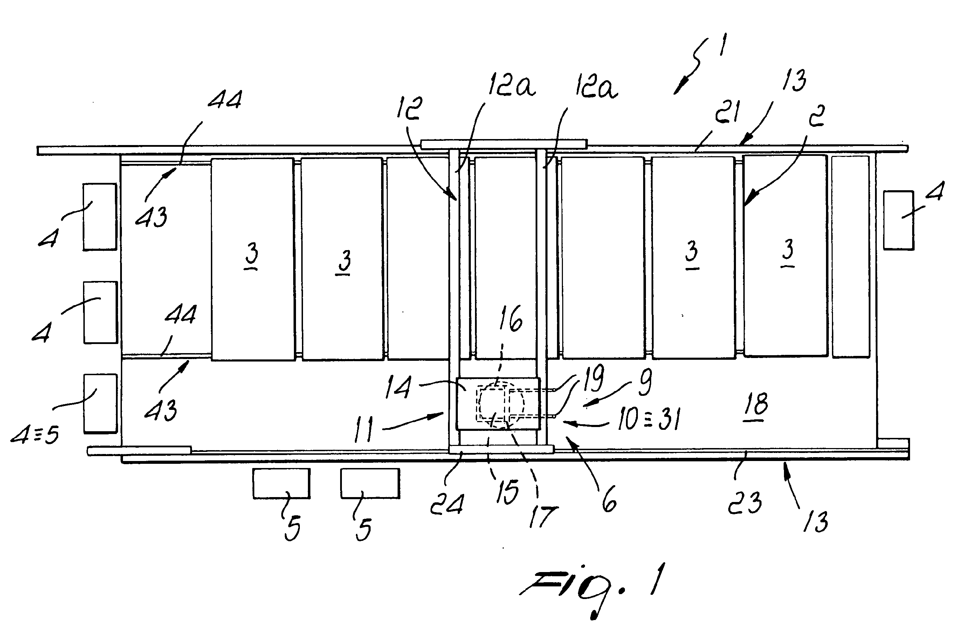

Figure 1 is a schematic plan view of the apparatus according to the invention;

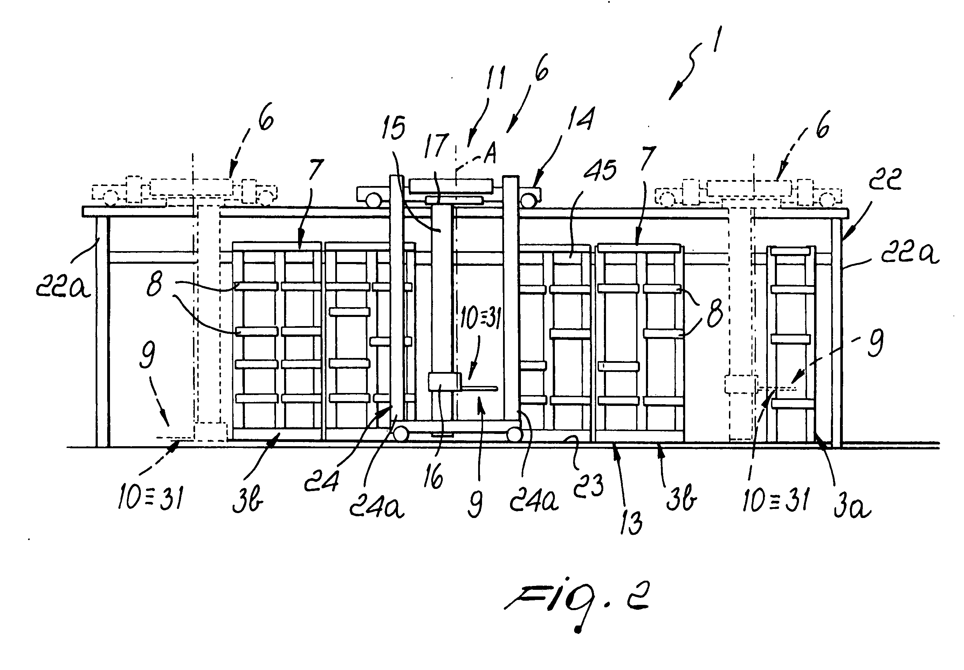

Figure 2 is a schematic partial side view of the apparatus of Figure 1;

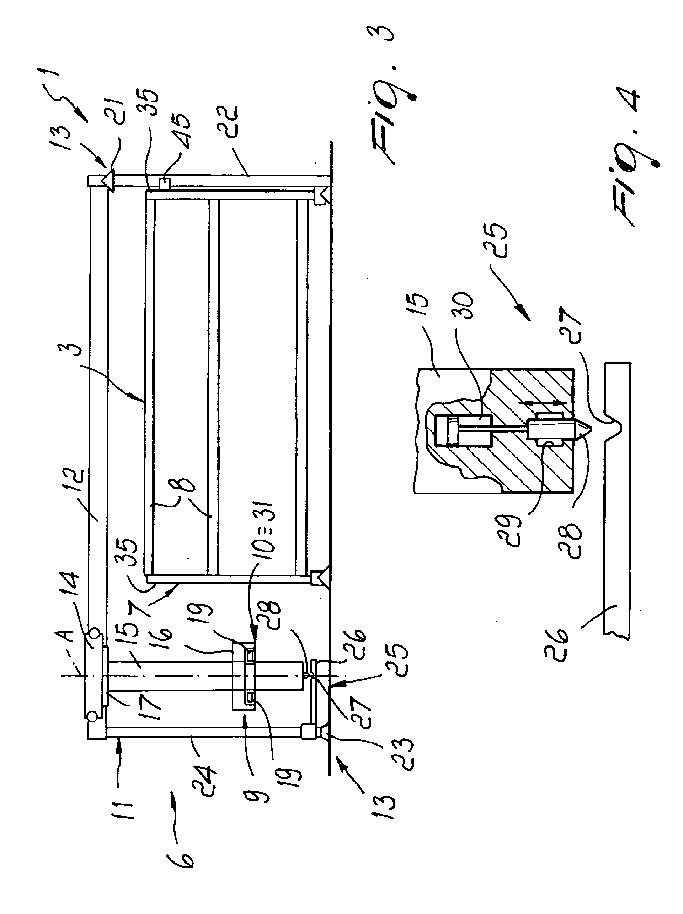

Figure 3 is a schematic front view of the apparatus of Figure 1;
Figure 4 is a schematic enlarged-scale view of a detail of Figure 3;
Figure 5 is a schematic partial plan view of the first handling means of the apparatus according to the invention;
Figure 6 is a schematic partial front view of the first handling means of Figure 5;
Figure 7 is a partial schematic side view of first and second handling means of an apparatus which is not part of the present invention;
Figure 8 is a partial schematic side view of an embodiment of the first and second handling means of the apparatus according to the invention;
Figure 9 is a schematic partial perspective view of a first embodiment of a rack of the apparatus according to the invention;
Figure 10 is a schematic partial front view of a second embodiment of a rack of the apparatus according to the invention.

With reference to the figures, the reference numeral 1 generally designates an apparatus for storing materials.

The apparatus 1 comprises at least one storage area 2, which is provided with at least one rack 3 for accommodating load units, not shown in the figures, at least one area 4 for depositing the load units to be transferred onto the racks 3, at least one area 5 for unloading the load units taken from the racks 3, and first handling means 6 for loading and unloading the load units onto and from said racks, preferably of the automated type.

The racks 3 are arranged so as to be mutually parallel inside the storage area 2, which has an elongated rectangular plan shape.

Conveniently, the apparatus 1 can have a plurality of deposit and unloading areas, designated respectively by the reference numerals 4 and 5, which are arranged on one or more sides of the storage area 2.

In a possible embodiment, one or more depositing and unloading regions 4 and 5 may coincide.

In an alternative embodiment of the apparatus 1, not shown in the figures, the first handling means 6 may serve a plurality of storage areas 2 that are juxtaposed in an orderly arrangement and between which corresponding separation aisles are interposed.

Each rack 3 comprises a supporting structure 7 and a plurality of horizontal shelves 8 that are detachably associated with the structure.

The racks 3 may be of the single-depth type 3a or of the double-depth type 3b.

The apparatus 1 further comprises second handling means 9 of the automated type for picking up and positioning the shelves 8 from and onto the supporting structures 7.

Advantageously, the apparatus 1 is provided with a conventional processing unit, not shown, for example of the programmable type, which is capable of managing the first and second handling means, designated respectively by the reference numerals 6 and 9.

Said processing unit, in addition to managing the pick-up and loading of the load units from and onto the racks 3 by means of the first handling means 6 according to conventional management algorithms, is capable of controlling the second handling means 9, so as to periodically update the arrangement of the shelves 8 on the supporting structures 7 depending on the number and type of load units to be allocated in the storage area 2, in order to vary the dimensions of the storage compartments provided on the racks 3 and optimize their capacity, adapting it to the actual requirements of the moment.

The second handling means 9 can, for example, pick up an empty shelf 8 from the corresponding rack 3 and reposition it on said rack or on another rack or deposit it temporarily in an area for collecting the shelves 8 removed from the racks 3, not shown in the figures, which is provided for example at floor level or above one or more of the racks 3 provided in the storage area 2.

The first handling means 6 comprise first means 10 for gripping the load units to be handled.

Conveniently, the first handling means 6 further comprise a robot 11 for supporting the first grip means 10, which is arranged at the storage area 2 and is suitable to allow said first grip means to move alternately along three mutually perpendicular axes, of which two lie on a horizontal plane and one lies vertically, and to rotate about said vertical axis.

In the particular embodiment shown, the robot 11 is of the portal type, and is substantially constituted by an overhead beam 12, which is arranged above the racks 3 and is slidingly associated along first straight guiding means 13; by a carriage 14, which is slidingly associated along the beam 12; by a column 15, which is supported by the carriage 14 and protrudes below said carriage; and by a slider 16, which is associated so that it can slide along the column 15 and supports the first grip means 10.

The first guiding means 13 are arranged parallel to the longer sides of the storage area 2, on mutually opposite sides of said area.

In the particular embodiment shown, the column 15 is associated with the carriage 14 so that it can rotate about a vertical axis A, which is parallel to the longitudinal axis of said column, by way of the interposition of a center bearing 17.

The beam 12 is constituted by two parallel straight cross-members 12a, between which the carriage 14 is interposed.

As an alternative, the column 15 might be rigidly associated with the carriage 14 and the slider 16 might be associated with said column so that it can rotate about the corresponding longitudinal axis.

However, alternative embodiments of the robot 11, not shown in the figures, are also possible; in said embodiments, for example, the column 15 is associated with a floor-mounted guide that runs between one or more aisles formed between the racks 3 and is optionally associated with an overhead abutment guide.

In the layout shown in the figures, the first guiding means 13 are perpendicular to the racks 3 and to the beam 12 and are mutually parallel, and the straight cross-members 12a are longer than the racks 3, so as to form a longitudinal aisle 18 that is arranged at the end of said racks and is parallel to the guiding means 13 for the passage of the column 15.

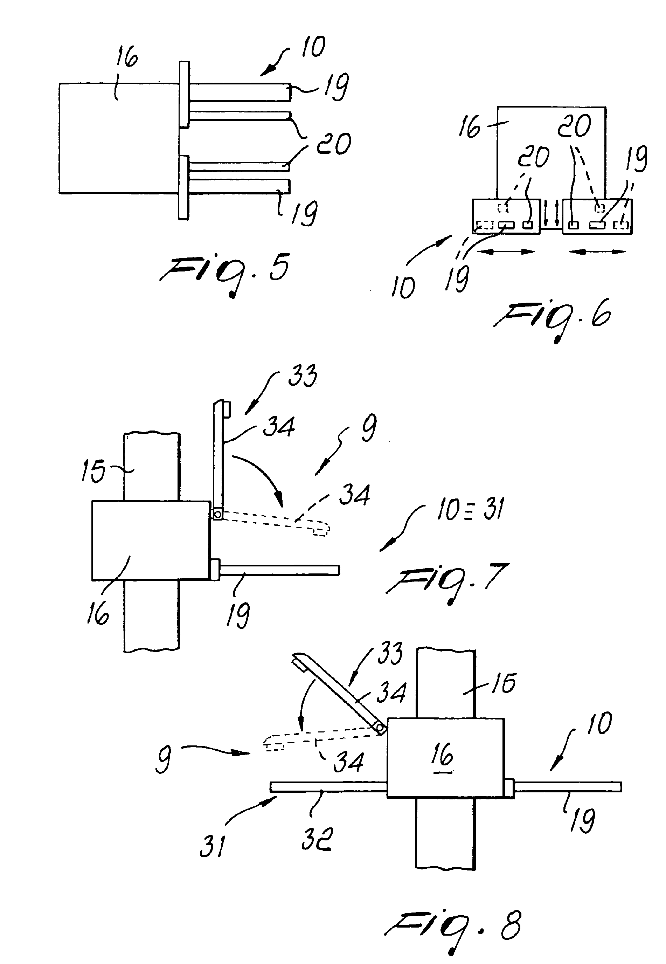

The first grip means 10 (Figures 5 and 6) comprise two first straight grip forks 19, which can be associated conveniently with first actuation means, not shown in the figures because they are of a conventional type, so as to perform an alternating translational motion toward and away from each other, in association with the slider 16.

Further, it is possible to provide alternative embodiments of the apparatus 1, not shown in the figures, in which the first grip means 10 comprise for example two forks that are shaped for handling load units constituted by spools, rolls or the like, or an automatic grab or the like, or one or more first magnetic grip elements, the load units to be handled being made of material of the ferromagnetic type, with suckers or others.

The first grip means 10 can further have two auxiliary elements 20 for gripping and locking the load unit to be handled, which are constituted by two straight auxiliary forks which have a transverse cross-section that is smaller than that of the first forks 19, are supported by the slider 16 between said first forks, and are suitable to abut below the load unit to be handled.

Further, the first grip means 10 can have second actuation means, not shown in the figures because they are of a conventional type, which are adapted to actuate the auxiliary elements 20 so that they perform an alternating translational motion in a vertical direction with respect to the slider 16 and toward and away from each other, and are associated with said slider.

If it is necessary to move for example a load unit composed on a conventional single-platform loading pallet, the first forks 19 and the auxiliary elements 20 are kept so that they are mutually coplanar and are moved so as to abut under the platform of said pallet at its mutually opposite cross-members.

If instead it is necessary to move a conventional two-platform loading pallet, the first forks 19 are spaced so as to abut against the mutually opposite cross-members of said pallet above the lower platform, while the auxiliary elements 20 are lifted so as to abut under the upper platform.

Conveniently, by means of the auxiliary elements 20 it is possible to achieve better locking and avoid any accidental movement of the load unit during handling.

The first guiding means 13 comprise a first straight overhead rail 21, which is supported by a supporting structure 22 provided at the longer side of the storage area 2 arranged on the opposite side of the longitudinal aisle 18, and a first straight floor-mounted rail 23 that delimits said aisle.

The cross-member 12 is rigidly associated with a supporting framework 24, which is constituted by two columns 24a arranged at the first floor-mounted rail 23.

The supporting structure 22 is constituted by two pillars 22a for supporting the first overhead rail 21, which are arranged at the mutually opposite ends of said rail.

As an alternative, the first guiding means 13 can be constituted by two first overhead rails 21 or by two first floor-mounted rails 23, the cross-member 12 being associated at each end with a corresponding framework 24.

Conveniently, the apparatus 1 has reference means 25 for the column 15 in its sliding along the longitudinal aisle 18; said reference means are adapted to contain the oscillations of said column during the travel of the beam 12 along the rails 21 and 23.

The reference means 25 comprise a horizontal bracket 26, which is supported in a cantilevered manner by the columns 24a, protrudes toward the longitudinal aisle 18, and is provided with a receptacle 27 that is associable with a pivot 28 that is supported so that it can move, inside a recess 29 formed at the lower end of the column 15, between a protruding configuration for engaging in the receptacle 27 and a configuration that is retracted within the recess 29 for disengaging from said receptacle.

The reference means 25 are provided with means for actuating the sliding of the pivot 28, which are constituted for example by a fluid-operated linear actuator 30.

The embodiment shown in Figure 7 is not part of the present invention, as the second movement means 9 are formed substantially monolithically with the first handling means 6.

In particular, the second handling means 9 have second means 31 for gripping the shelves 8, which are formed monolithically with the first grip means 10 and are constituted by the first forks 19 and, if provided, by the auxiliary elements 20.

In this case, the auxiliary elements 20 also act during the handling of the shelves 8, facilitating their grip during transfer.

In an embodiment shown in Figure 8, the second grip means 31, which are independent of the first grip means 10, comprise two second straight grip forks 32, only one of which is visible in the figure, said forks being associated with the slider 16 on the opposite side with respect to the first forks 19.

The column 15 is therefore actuated so as to rotate about the axis A in order to alternatively position the first forks 19 or the second forks 32 so that they face the compartment at which it is necessary to pick up or deposit, respectively, a load unit or a shelf 8.

As an alternative, the second forks 32 might be arranged at a face of the slider 16 that is adjacent to the face on which the first forks 19 are associated, the slider 16 being substantially prism-shaped.

However, alternative embodiments are also possible in which the second grip means 31 are of a different type and are constituted for example by at least one second magnetic grip element, the shelves 8 being constituted by a material of a substantially ferromagnetic type, with suckers or others.

Conveniently, the second handling means 9 are provided with presser means 33, which are suitable to abut above the shelf 8 to be moved so as to prevent accidental movements thereof during handling.

The presser means 33 are constituted by two arms 34, only one of which is shown in the figures; said arms are associated with the slider 16 above the second grip means 31, i.e., above the first forks 19 (Figure 7) or the second forks 32 (Figure 8), depending on whether said second grip means are integrated with the first grip means 10 or not.

Each arm 34 has an end that is articulated to the slider 16, and its opposite end is free and movable alternatively between an inactive configuration, in which it is spaced from the shelf 8 to be handled (shown in solid lines in Figures 7 and 8), and an active configuration, in which it is arranged so as to rest on said rack (shown in dashed lines in Figures 7 and 8).

Each shelf 8 comprises two seats 8a, which are arranged transversely to the longitudinal extension of said shelf and at its centerline, and in which it is possible to insert the second grip means 31, i.e., the first forks 19 and optionally the auxiliary elements 20 or the second forks 32, depending on whether said second grip means are integrated with the first grip means 10 or not.

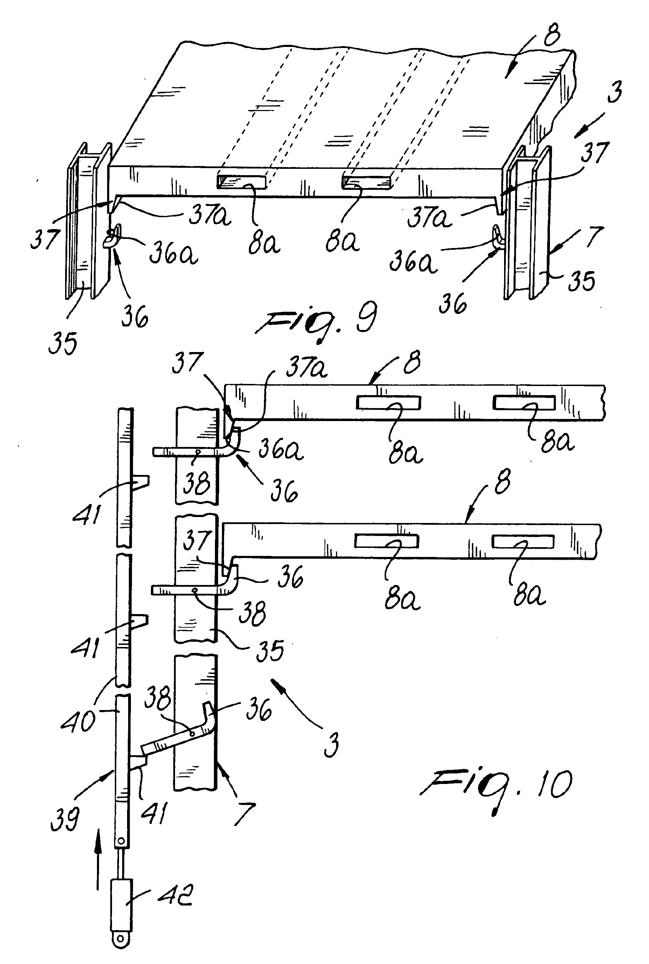

The supporting structure 7 of each rack 3 comprises a plurality of uprights 35, only two of which are shown in Figure 9; said uprights are arranged at respective corners of the corresponding shelves 8 and are associated with a plurality of elements 36 for supporting said shelves.

Each shelf 8 is arranged so as to rest on four supporting elements 36 that are mutually coplanar and are each associated with a corresponding upright 35.

Each shelf 8 can therefore be removed from the corresponding supporting structure 7 by lifting it and/or sliding it horizontally off the corresponding supporting elements 36, which act as guides for the sliding of the shelf 8.

Vice versa, a shelf 8 can be arranged on the corresponding supporting structure 7 by lowering it so that it rests on the corresponding supporting elements 36, or by inserting it with a horizontal translational motion, said supporting elements acting as guides for the sliding of the shelf 8.

Each supporting element 36 is provided with a tab that can be coupled to one of the shelves 8, protrudes from the corresponding upright 35, and is directed toward the inside of the corresponding rack 3.

Conveniently, each shelf 8 is provided with two profiled elements 37, which are arranged at the two mutually opposite sides of said shelf that are arranged transversely to the longitudinal extension of the corresponding rack 3 and protrude downward from the shelf 8.

Each profiled element 37 is provided with a surface 37a for abutment on a corresponding surface 36a of the corresponding supporting element 36.

The surfaces 36a and 37a are shaped so as to mate, and in the particular embodiment shown they are inclined so as to form a wedge-like coupling between each profiled element 37 and the corresponding supporting elements 36.

However, alternative embodiments, not shown in the figures, are possible in which for example the supporting elements 36 are suitable to enter corresponding receptacles formed below the shelves 8.

In a first embodiment of the racks 3 (Figure 9), the supporting elements 36 are fixed rigidly to the uprights 35 and are distributed with a uniform spacing along said uprights.

In a second embodiment of the racks 3 (Figure 10), the supporting elements 36 are associated with the uprights 35 so that they can rotate about respective horizontal pivots 38, the center of gravity of each supporting element 36 being arranged, with respect to the pivot 38, on the opposite side with respect to the portion of said element that is suitable to mate with the corresponding shelf 8, so that the supporting element 36, when it is not engaged with the shelf 8, tends to rotate about the corresponding pivot 38, completely clearing the compartment of the corresponding rack 3.

Conveniently, means 39 for actuating the rotation of the supporting elements 36 about the respective pivots 38 are provided and are constituted by a rod 40, which is arranged vertically proximate to each upright 35, by a plurality of brackets 41, which are distributed along the rod 40 and are suitable to each abut against a corresponding supporting element 36 proximate to the corresponding center of gravity, and by means for actuating the alternating translational motion of the rod 40 parallel to itself, which are constituted by a fluid-operated linear actuator 42 supported by said upright.

In the upward stroke of the rod 40, the brackets 41 abut against the free supporting elements 36, rotating them about their corresponding pivots 38, so as to move them into a configuration that allows them to engage a corresponding shelf 8.

Once positioning of the shelf or shelves 8 to be allocated on a same rack 3 has been performed, the corresponding rods 40 perform a downward translational motion and accordingly the supporting elements 36 that are still free rotate toward the outside of the rack 3, clearing the compartments of said rack.

In another embodiment, not shown in the figures, the supporting elements 36 can be inserted for example so that they can slide in a horizontal direction in corresponding holes formed in the uprights 35 and can be associated with means for actuating their translational motion along said holes.

Advantageously, in the particular embodiment of the apparatus 1 shown in the figures, the racks 3 are of a compactable type and are slidingly associated along second guiding means 43, which are arranged parallel to the first guiding means 13 and are constituted by two second floor-mounted straight rails 44.

The racks 3 are therefore actuated so as to perform a translational motion along the second rails 44 by corresponding means, not shown because they are of a conventional type, so as to form one or more working aisles at the positions where the first or second handling means 6 and 9 respectively are to operate.

The use of compactable racks 3 allows to further increase the volume saturation index of the apparatus 1.

Finally, there is an abutment guide 45 for the sliding of the racks 3 along the second rails 44, which is arranged horizontally and is supported by the pillars 22a.

However, alternative embodiments are also possible in which the first and second handling means, 6 and 9 respectively, are shaped differently.

For example, the second handling means 9 may be supported by an additional slider slidingly associated along the column 15, or may be supported by an additional column that is slidingly associated along the beam 12.

An embodiment is also possible in which the first and second handling means, 6 and 9 respectively, are provided with respective separate robots 11.

In practice it has been found that the described invention achieves the intended aim and objects.

In particular, the apparatus according to the invention allows to obtain a variable-geometry storage unit, so to speak, which allows to optimize the corresponding volume saturation index, as well as the flexibility and capacity of the storage area.

The invention thus conceived is susceptible of numerous modifications and variations.

In practice, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (1) for storing materials, comprising:
at least one rack (3) for accommodating a plurality of load units, wherein said rack (3) comprises a plurality of shelves (8) for supporting said load units, said shelves (8) being detachably associated with a supporting structure (7);
at least one robot (11) arranged at said rack (3) and comprising at least one slider (16), said at least one slider (16) supporting handling means of an automated type for loading and unloading said load units on and from said rack (3) and for picking up and positioning said shelves (8) from and on said supporting structure (7), wherein said handling means comprise first means (10) for gripping said load units,
**characterized in that** said handling means comprise second means (31) for gripping said shelves (8), said second grip means (31) being associated with said at least one slider (16), said at least one slider (16) being able to move along three axes that are mutually substantially perpendicular and to rotate about a substantially vertical axis (A) to alternatively position said first grip means (10) or said second grip means (31) to face said rack (3) to pick up or deposit, respectively, a load unit or a shelf (8).

2. The apparatus (1) according to claim 1,
**characterized in that** it comprises a processing unit for managing said handling means.

3. The apparatus (1) according to claim 1, **characterized in that** said robot (11) is of the portal type.

4. The apparatus (1) according to claim 3, **characterized in that** said portal robot (11) comprises: an overhead beam (12), which is arranged above said rack (7) and is slidingly associated along first guiding means (13); at least one carriage (14), which is slidingly associated along said beam (12); at least one column (15), which is associated with said carriage (14) and protrudes below said carriage (14); and said at least one slider (16), which is slidingly associated along said column (15) and supports said first grip means (10).

5. The apparatus (1) according to claim 4, **characterized in that** said column (15) is associated with said carriage (14) so that it can rotate about said substantially vertical axis (A).

6. The apparatus (1) according to claim 4, **characterized in that** said slider (16) is associated with said column (15) so that it can rotate about said substantially vertical axis (A).

7. The apparatus (1) according to one or more of the preceding claims,
**characterized in that** said first grip means (10) comprise at least one pair of first grip forks (19).

8. The apparatus (1) according to claim 7, **characterized in that** said first grip means (10) comprise at least one auxiliary element (20) for gripping and locking the load unit to be handled.

9. The apparatus (1) according to claim 4, **characterized in that** said first guiding means (13) comprise at least one first floor-mounted rail (23).

10. The apparatus (1) according to claim 9, **characterized in that** said first guiding means (13) comprise at least one first overhead rail (21), which is associated with a structure (22) for supporting said overhead beam (12).

11. The apparatus (1) according to claim 10, **characterized in that** said first guiding means (13) comprise one of said first floor-mounted rails (23) and one of said first overhead rails (21), the overhead beam (12) being rigidly associated with a supporting framework (24) arranged at the first floor-mounted rail (23).

12. The apparatus (1) according to claim 11, **characterized in that** it comprises reference means (25) for said column (15) in the sliding of said beam (12) along said first guiding means (13).

13. The apparatus (1) according to claim 12, **characterized in that** said reference means (25) comprise a bracket (26) that protrudes from said supporting framework (24) and is provided with a receptacle (27) that is associable with a pivot (28) that is supported so that it can move at the lower end of said column (15) between a protruding configuration for engagement in said receptacle (27) and a retracted configuration for disengagement from said receptacle (27).

14. The apparatus (1) according to claim 1, **characterized in that** said second grip means (31) comprise at least one pair of second grip forks (32).

15. The apparatus (1) according to claim 1, **characterized in that** said second grip means (31) comprise at least one second grip element of the type provided with a magnet, said shelves (8) being constituted by a material of a substantially ferromagnetic type.

16. The apparatus (1) according to claim 1, **characterized in that** said second grip means (31) comprise at least one second grip element of the sucker type.

17. The apparatus (1) according to claim 1, **characterized in that** said second grip means (31) comprise presser means (33) that are suitable to abut on top of the shelf (8) to be handled.

18. The apparatus (1) according to claim 17, **characterized in that** said presser means (33) comprise at least one arm (34) provided with an arm in which one end is articulately associated with said slider (16) and an opposite end is free and movable alternately between an inactive configuration, in which it is spaced from said shelf (8) to be handled, and an active configuration, in which it rests on said shelf (8).

19. The apparatus (1) according to claim 18, **characterized in that** each one of said shelves (8) comprises at least one seat (8a) that can cooperate with said second handling means (9).

20. The apparatus (1) according to one or more of the preceding claims,
**characterized in that** said supporting structure (7) comprises a plurality of uprights (35) associated with respective elements (36) for supporting said shelves (8).

21. The apparatus (1) according to claim 20, **characterized in that** each one of said shelves (8) comprises two profiled elements (37), which are arranged at two mutually opposite sides of said shelf (8) and are provided with respective surfaces (37a) for abutment against corresponding surfaces (36a) of said supporting elements (36).

22. The apparatus (1) according to claim 21, **characterized in that** the facing surfaces (36a,37a) of said profiled elements (37) and of the corresponding supporting elements (36) are shaped so as to substantially mate.

23. The apparatus (1) according to claim 22, **characterized in that** the facing surfaces (36a,37a) of said profiled elements (37) and of the corresponding supporting elements (36) are contoured so as to be inclined and form substantially wedge-like coupling.

24. The apparatus (1) according to claim 20, **characterized in that** each one of said supporting elements (36) is associated with the corresponding upright (35) so that it can rotate about a corresponding pivot (38) that is arranged substantially horizontally, the center of gravity of the supporting element (36) being arranged on the opposite side with respect to the portion of said element that is associable with the corresponding shelf (8) with respect to the corresponding pivot (38).

25. The apparatus (1) according to claim 24, **characterized in that** it comprises means (39) of an automated type for actuating the rotation of said supporting elements (36) about the corresponding pivots (38).

26. The apparatus (1) according to claim 25, **characterized in that** said means (39) for actuating the rotation comprise a rod (40), which is arranged substantially vertically at each one of said uprights (35); a plurality of brackets (41), which are distributed along said rod (40) and are each suitable to abut against a corresponding supporting element (36) proximate to the corresponding center of gravity; and means (42) for actuating the translational motion of said rod (40) in a substantially vertical direction.

27. The apparatus (1) according to claim 20, **characterized in that** each one of said supporting elements (36) is slidingly inserted in a substantially horizontal direction in a corresponding hole formed in the corresponding upright (35).

28. The apparatus (1) according to one or more of the preceding claims 4-27,
**characterized in that** it comprises second guiding means (43) along which said rack (3) is slidingly associated.

## Patentansprüche

1. Eine Vorrichtung (1) zum Lagern von Materialien, die Folgendes umfasst:
mindestens ein Gestell (3) zur Aufnahme einer Vielzahl von Ladeeinheiten, wobei das Gestell (3) eine Vielzahl von Regalen (8) zum Tragen der Ladeeinheiten umfasst, wobei die Regale (8) lösbar mit einer tragenden Struktur (7) verbunden sind,
mindestens einen Roboter (11), der an dem Gestell (3) angeordnet ist und mindestens einen Schieber (16) umfasst, wobei der mindestens eine Schieber (16) Handhabungsmittel eines automatischen Typs zum Einladen und Ausladen der Ladeeinheiten auf das und von dem Gestell (3) und zum Aufnehmen und Positionieren der Regale (8) von und auf der tragenden Struktur (7) trägt, wobei die Handhabungsmittel erste Mittel (10) zum Greifen der Ladeeinheiten umfassen,
**dadurch gekennzeichnet, dass** die Handhabungsmittel zweite Mittel (31) zum Greifen der Regale (8) umfassen, wobei die zweiten Greifmittel (31) mit dem mindestens einen Schieber (16) verbunden sind, wobei der mindestens eine Schieber (16) sich entlang dreier Achsen bewegen kann, die im Wesentlichen rechtwinklig zueinander sind, und sich um eine im Wesentlichen vertikale Achse (A) drehen kann, um alternativ die ersten Greifmittel (10) oder die zweiten Greifmittel (31) so zu positionieren, dass sie zu dem Gestell (3) hin weisen, um eine Ladeeinheit oder ein Regal (8) aufzunehmen beziehungsweise abzusetzen.

2. Die Vorrichtung (1) gemäß Anspruch 1, **dadurch gekennzeichnet, dass** sie eine Verarbeitungseinheit zur Handhabung der Handhabungsmittel umfasst.

3. Die Vorrichtung (1) gemäß Anspruch 1, **dadurch gekennzeichnet, dass** der Roboter (11) vom Portal-Typ ist.

4. Die Vorrichtung (1) gemäß Anspruch 3, **dadurch gekennzeichnet, dass** der Portal-Roboter (11) Folgendes umfasst:
einen Deckenbalken (12), der oberhalb des Gestells (7) angeordnet und verschiebbar entlang ersten Führungsmitteln (13) verbunden ist; mindestens einen Schlitten (14), der verschiebbar entlang dem Balken (12) verbunden ist; mindestens einen Ständer (15), der mit dem Schlitten (14) verbunden ist und der unterhalb des Schlittens (14) herausragt; und den mindestens einen Schieber (16), der verschiebbar entlang dem Ständer (15) verbunden ist und die ersten Greifmittel (10) trägt.

5. Die Vorrichtung (1) gemäß Anspruch 4, **dadurch gekennzeichnet, dass** der Ständer (15) mit dem Schlitten (14) verbunden ist, so dass er sich um die im Wesentlichen vertikale Achse (A) drehen kann.

6. Die Vorrichtung (1) gemäß Anspruch 4, **dadurch gekennzeichnet, dass** der Schieber (16) mit dem Ständer (15) verbunden ist, so dass er sich um die im Wesentlichen vertikale Achse (A) drehen kann.

7. Die Vorrichtung (1) gemäß einem oder mehreren der obigen Ansprüche, **dadurch gekennzeichnet, dass** die ersten Greifmittel (10) mindestens ein Paar erster Greifgabeln (19) umfassen.

8. Die Vorrichtung (1) gemäß Anspruch 7, **dadurch gekennzeichnet, dass** die ersten Greifmittel (10) mindestens ein Hilfselement (20) zum Greifen und Blockieren der Ladeeinheit, die zu handhaben ist, umfassen.

9. Die Vorrichtung (1) gemäß Anspruch 4, **dadurch gekennzeichnet, dass** die ersten Führungsmittel (13) mindestens eine erste am Boden montierte Schiene (23) umfassen.

10. Die Vorrichtung (1) gemäß Anspruch 9, **dadurch gekennzeichnet, dass** die ersten Führungsmittel (13) mindestens eine erste Decken-Schiene (21) umfassen, die mit einer Struktur (22) zum Tragen des Deckenbalkens (12) verbunden ist.

11. Die Vorrichtung (1) gemäß Anspruch 10, **dadurch gekennzeichnet, dass** die ersten Führungsmittel (13) entweder die ersten am Boden montierten Schienen (23) und die ersten Decken-Schienen (21) umfassen, wobei der Deckenbalken (12) starr mit einem Stützrahmen (24) verbunden ist, der an der ersten am Boden montierten Schiene (23) angebracht ist.

12. Die Vorrichtung (1) gemäß Anspruch 11, **dadurch gekennzeichnet, dass** sie Bezugsmittel (25) für die Säule (15) im Gleiten des Balkens (12) entlang den ersten Führungsmitteln (13) umfasst.

13. Die Vorrichtung (1) gemäß Anspruch 12, **dadurch gekennzeichnet, dass** die Bezugsmittel (25) einen Träger (26) umfassen, der aus dem Stützrahmen (24) herausragt und mit einer Vertiefung (27) versehen ist, die mit einem Drehzapfen (28) verbunden werden kann, der so gelagert ist, dass er sich am unteren Ende des Ständers (15) zwischen einer herausragenden Anordnung zum Eingriff in die Vertiefung (27) und einer zurückgezogenen Anordnung zum Lösen aus der Vertiefung (27) bewegen kann.

14. Die Vorrichtung (1) gemäß Anspruch 1, **dadurch gekennzeichnet, dass** die zweiten Greifmittel (31) mindestens ein Paar von zweiten Greifgabeln (32) umfassen.

15. Die Vorrichtung (1) gemäß Anspruch 1, **dadurch gekennzeichnet, dass** die zweiten Greifmittel (31) mindestens ein zweites Greifelement von der Art umfassen, die mit einem Magneten versehen ist, wobei die Regale (8) aus einem Material von einer im Wesentlichen ferromagnetischen Art bestehen.

16. Die Vorrichtung (1) gemäß Anspruch 1, **dadurch gekennzeichnet, dass** die zweiten Greifmittel (31) mindestens ein zweites Greifelement vom Saugertyp umfassen.

17. Die Vorrichtung (1) gemäß Anspruch 1, **dadurch gekennzeichnet, dass** die zweiten Greifmittel (31) Pressmittel (33) umfassen, die geeignet sind, an die Oberseite des zu handhabenden Regals (8) anzustoßen.

18. Die Vorrichtung (1) gemäß Anspruch 17, **dadurch gekennzeichnet, dass** die Pressmittel (33) mindestens einen Arm (34) umfassen, der mit einem Arm versehen ist, dessen eines Ende gelenkig mit dem Schieber (16) verbunden ist, und dessen gegenüberliegendes Ende frei und wechselnd zwischen einer inaktiven Anordnung beweglich ist, in der es von dem zu handhabenden Regal (8) beabstandet ist, und einer aktiven Anordnung, in der es auf dem Regal (8) aufliegt.

19. Die Vorrichtung (1) gemäß Anspruch 18, **dadurch gekennzeichnet, dass** jedes der Regale (8) mindestens einen Sitz (8a) umfasst, der mit den zweiten Handhabungsmitteln (9) zusammenwirken kann.

20. Die Vorrichtung (1) gemäß einem oder mehreren der obigen Ansprüche, **dadurch gekennzeichnet, dass** die tragende Struktur (7) eine Vielzahl von Pfosten (35) umfasst, die mit jeweiligen Elementen (36) zum Tragen der Regale (8) verbunden sind.

21. Die Vorrichtung (1) gemäß Anspruch 20, **dadurch gekennzeichnet, dass** jedes der Regale (8) zwei profilierte Elemente (37) umfasst, die auf zwei einander gegenüberliegenden Seiten des Regals (8) angeordnet sind und mit jeweiligen Oberflächen (37a) zum Anstoßen an entsprechende Oberflächen (36a) der tragenden Elemente (36) ausgestattet sind.

22. Die Vorrichtung (1) gemäß Anspruch 21, **dadurch gekennzeichnet, dass** die einander gegenüberliegenden Oberflächen (36a, 37a) der profilierten Elemente (37) und der entsprechenden tragenden Elemente (36) so geformt sind, dass sie im Wesentlichen zusammenpassen.

23. Die Vorrichtung (1) gemäß Anspruch 22, **dadurch gekennzeichnet, dass** die einander gegenüberliegenden Oberflächen (36a, 37a) der profilierten Elemente (37) und der entsprechenden tragenden Elemente (36) so geformt sind, dass sie schräg sind und im Wesentlichen keilförmige Verbindungen bilden.

24. Die Vorrichtung (1) gemäß Anspruch 20, **dadurch gekennzeichnet, dass** jedes der tragenden Elemente (36) mit dem entsprechenden Pfosten (35) so verbunden ist, dass es sich um einen entsprechenden Drehzapfen (38) drehen kann, der im Wesentlichen horizontal angeordnet ist, wobei der Gewichtsschwerpunkt des tragenden Elements (36) auf der Seite angeordnet ist, die dem Abschnitt des Elements gegenüberliegt, der mit dem entsprechenden Regal (8) verbunden werden kann, und zwar mit Bezug auf den entsprechenden Drehzapfen (38).

25. Die Vorrichtung (1) gemäß Anspruch 24, **dadurch gekennzeichnet, dass** sie Mittel (39) eines automatischen Typs zur Veranlassung der Drehung der tragenden Elemente (36) um die entsprechenden Drehzapfen (38) umfasst.

26. Die Vorrichtung (1) gemäß Anspruch 25, **dadurch gekennzeichnet, dass** die Mittel (39) zur Veranlassung der Drehung einen Stab (40) umfassen, der im Wesentlichen senkrecht an jedem der Pfosten (35) angeordnet ist; eine Vielzahl von Trägern (41), die entlang dem Stab (40) verteilt sind und jeweils geeignet sind, gegen ein entsprechendes tragendes Element (36) nahe dem entsprechenden Gewichtsschwerpunkt anzustoßen; und Mittel (42) zur Veranlassung der translatorischen Bewegung des Stabs (40) in einer im Wesentlichen vertikalen Richtung.

27. Die Vorrichtung (1) gemäß Anspruch 20, **dadurch gekennzeichnet, dass** jedes der tragenden Elemente (36) verschiebbar in einer im Wesentlichen horizontalen Richtung in ein entsprechendes Loch eingesetzt wird, das in dem entsprechenden Pfosten (35) geformt ist.

28. Die Vorrichtung (1) gemäß einem oder mehreren der obigen Ansprüche 4-27, **dadurch gekennzeichnet, dass** sie zweite Führungsmittel (43) umfasst, entlang denen das Gestell (3) verschiebbar verbunden ist.

## Revendications

1. Appareil (1) pour stocker des matériaux, comprenant :
au moins un râtelier (3) pour recevoir une pluralité d'unités de charge, ledit râtelier (3) comprenant une pluralité d'étagères (8) pour supporter lesdites unités de charge, lesdites étagères (8) étant associées de façon détachable à une structure de support (7) ;
au moins un robot (11) disposé sur ledit râtelier (3), et comprenant au moins un élément coulissant (16), ledit élément coulissant au nombre d'au moins un (16) supportant des moyens de manipulation d'un type automatique pour charger et décharger lesdites unités de charge sur ledit râtelier (3) et à partir de celui-ci, et pour saisir et positionner lesdites étagères (8) à partir de ladite structure de support (7) et sur celle-ci, lesdits moyens de manipulation comprenant des premiers moyens (10) pour saisir lesdites unités de charge,
**caractérisé en ce que** lesdits moyens de manipulation comprennent des deuxièmes moyens (31) pour saisir lesdites étagères (8), lesdits deuxièmes moyens de saisie (31) étant associés audit élément coulissant au nombre d'au moins un (16), ledit élément coulissant au nombre d'au moins un (16) étant susceptible de se déplacer le long de trois axes qui sont mutuellement sensiblement perpendiculaires et de tourner autour d'un axe sensiblement vertical (A) de façon à positionner en alternance lesdits premiers moyens de saisie (10) ou lesdits deuxièmes moyens de saisie (31) de façon à ce qu'ils fassent face audit râtelier (3) afin de saisir ou de déposer, respectivement, une unité de charge ou une étagère (8).

2. Appareil (1) selon la revendication 1, **caractérisé en ce qu'**il comprend une unité de traitement pour gérer lesdits moyens de manipulation.

3. Appareil (1) selon la revendication 1, **caractérisé en ce que** ledit robot (11) est du type portique.

4. Appareil (1) selon la revendication 3, **caractérisé en ce que** ledit robot du type portique (11) comprend : une poutre de portique (12), qui est disposée au-dessus de ladite crémaillère (7) et qui est associée de façon à pouvoir coulisser le long de premier moyens de guidage (13) ; au moins un chariot (14), qui est associé de façon à pouvoir coulisser le long de ladite poutre (12) ; au moins une colonne (15), qui est associée audit chariot (14) et qui fait saillie en dessous dudit chariot (14) ; et ledit élément coulissant au nombre d'au moins un (16), qui est associé de façon à pouvoir coulisser le long de ladite colonne (15) et qui supporte lesdits premiers moyens de saisie (10).

5. Appareil (1) selon la revendication 4, **caractérisé en ce que** ladite colonne (15) est associée audit chariot (14) de telle sorte qu'elle puisse tourner autour dudit axe sensiblement vertical (A).

6. Appareil (1) selon la revendication 4, **caractérisé en ce que** ledit élément coulissant (16) est associé à ladite colonne (15) de telle sorte qu'il puisse tourner autour dudit axe sensiblement vertical (A).

7. Appareil (1) selon l'une ou plusieurs des revendications précédentes, **caractérisé en ce que** lesdits premiers moyens de saisie (10) comprennent au moins une paire de premières fourches de saisie (19).

8. Appareil (1) selon la revendication 7, **caractérisé en ce que** lesdits premiers moyens de saisie (10) comprennent au moins un élément auxiliaire (20) pour saisir et verrouiller l'unité de charge devant être manipulée.

9. Appareil (1) selon la revendication 4, **caractérisé en ce que** lesdits premiers moyens de guidage (13) comprennent au moins un premier rail monté sur le sol (23) .

10. Appareil (1) selon la revendication 9, **caractérisé en ce que** lesdits premiers moyens de guidage (13) comprennent au moins un premier rail de portique (21), qui est associé à une structure (22) pour supporter ladite poutre de portique (12).

11. Appareil (1) selon la revendication 10,
**caractérisé en ce que** lesdits premiers moyens de guidage (13) comprennent l'un desdits premiers rails montés sur le sol (23) et l'un desdits premiers rails de portique (21), la poutre de portique (12) étant rigidement associée à une structure de support (24) disposée sur le premier rail monté sur le sol (23).

12. Appareil (1) selon la revendication 11,
**caractérisé en ce qu'**il comprend des moyens de référence (25) pour ladite colonne (15) dans le coulissement de ladite poutre (12) le long desdits premiers moyens de guidage (13).

13. Appareil (1) selon la revendication 12,
**caractérisé en ce que** lesdits moyens de référence (25) comprennent un étrier (26) qui fait saillie à partir de ladite structure de support (24) et qui est muni d'un réceptacle (27) qui peut être associé à un pivot (28) qui est supporté de telle sorte qu'il peut se déplacer à l'extrémité inférieure de ladite colonne (15) entre une configuration saillante pour venir en prise dans ledit réceptacle (27) et une configuration rétractée pour quitter sa prise à partir dudit réceptacle (27).

14. Appareil (1) selon la revendication 1, **caractérisé en ce que** lesdits deuxièmes moyens de saisie (31) comprennent au moins une paire de deuxièmes fourches de saisie (32).

15. Appareil (1) selon la revendication 1, **caractérisé en ce que** lesdits deuxièmes moyens de saisie (31) comprennent au moins un deuxième élément de saisie du type muni d'un aimant, lesdites étagères (8) étant constituées par un matériau d'un type sensiblement ferromagnétique.

16. Appareil (1) selon la revendication 1, **caractérisé en ce que** lesdits deuxièmes moyens de saisie (31) comprennent au moins un deuxième élément de saisie du type élément d'aspiration.

17. Appareil (1) selon la revendication 1, **caractérisé en ce que** lesdits deuxièmes moyens de saisie (31) comprennent des moyens formant dispositif de pression (33) qui sont appropriés pour buter sur l'étagère (8) devant être manipulée.

18. Appareil (1) selon la revendication 17,
**caractérisé en ce que** lesdits moyens formant dispositif de pression (33) comprennent au moins un bras (34) muni d'un bras dont une extrémité est associée de façon articulée audit élément coulissant (16) et dont une extrémité opposée est libre et mobile de façon alternée entre une configuration inactive, dans laquelle elle est espacée de ladite étagère (8) devant être manipulée, et une configuration active, dans laquelle elle repose sur ladite étagère (8).

19. Appareil (1) selon la revendication 18,
**caractérisé en ce que** chacune desdites étagères (8) comprend au moins un siège (8a) qui peut coopérer avec lesdits deuxièmes moyens de manipulation (9).

20. Appareil (1) selon l'une ou plusieurs des revendications précédentes, **caractérisé en ce que** ladite structure de support (7) comprend une pluralité de montants (35) associés à des éléments respectifs (36) pour supporter lesdites étagères (8).

21. Appareil (1) selon la revendication 20,
**caractérisé en ce que** chacune desdites étagères (8) comprend deux éléments profilés (37), qui sont disposés en deux côtés mutuellement opposés de ladite étagère (8) et sont munis de surfaces respectives (37a) pour buter contre des surfaces correspondantes (36a) desdits éléments de support (36).

22. Appareil (1) selon la revendication 21,
**caractérisé en ce que** les surfaces en vis-à-vis (36a, 37a) desdits éléments profilés (37) et des éléments de support correspondants (36) sont conformées de façon à être sensiblement accouplées.

23. Appareil (1) selon la revendication 22,
**caractérisé en ce que** les surfaces en vis-à-vis (36a, 37a) desdits éléments profilés (37) et des éléments de support correspondants (36) sont conformées de façon à être inclinées et à former des accouplements sensiblement en forme de coin.

24. Appareil (1) selon la revendication 20,
**caractérisé en ce que** chacun desdits éléments de support (36) est associé au montant correspondant (35) de telle sorte qu'il puisse tourner autour d'un pivot correspondant (38) qui est disposé de façon sensiblement horizontale, le centre de gravité de l'élément de support (36) étant disposé sur le côté opposé par rapport à la partie dudit élément qui peut être associée à l'étagère correspondante (8) vis-à-vis du pivot correspondant (38).

25. Appareil (1) selon la revendication 24,
**caractérisé en ce qu'**il comprend des moyens (39) d'un type automatique pour actionner la rotation desdits éléments de support (36) autour des pivots correspondants (38).

26. Appareil (1) selon la revendication 25,
**caractérisé en ce que** lesdits moyens (39) pour actionner la rotation comprennent une tige (40)', qui est disposée de façon sensiblement verticale sur chacun desdits montants (35) ; une pluralité d'étriers (41), qui sont répartis le long de ladite tige (40) et qui sont chacun appropriés pour buter contre un élément de support correspondant (36) à proximité du centre de gravité correspondant ; et des moyens (42) pour actionner le mouvement de translation de ladite tige (40) dans une direction sensiblement verticale.

27. Appareil (1) selon la revendication 20,
**caractérisé en ce que** chacun desdits éléments de support (36) est inséré de façon à pouvoir coulisser dans une direction sensiblement horizontale dans un trou correspondant formé dans le montant correspondant (35).

28. Appareil (1) selon l'une ou plusieurs des revendications 4 à 27 qui précèdent, **caractérisé en ce qu'**il comprend des deuxièmes moyens de guidage (43) le long desquels ledit râtelier (3) est associé de façon à pouvoir coulisser.
